# EUROPÄISCHE PATENTANMELDUNG

(11) **EP 2 650 106 A1**
(43) Veröffentlichungstag der Anmeldung: **16.10.2013**
(21) Anmeldenummer: 13162254.0
(22) Anmeldetag: 04.04.2013
(51) Int. Cl.: B29C 67/00, C08J 3/14, C08L 77/06

(54) **Polymerpulver mit angepasstem Schmelzverhalten**

(30) Priorität: 11.04.2012 DE 102012205908
(71) Anmelder: Evonik Industries AG, 45128 Essen (DE)
(72) Erfinder: Diekmann, Wolfgang, 45731 Waltrop (DE); Baumann, Franz-Erich, 48249 Dülmen (DE); Grebe, Maik, 44805 Bochum (DE)

(57) **Zusammenfassung**

Die vorliegende Erfindung betrifft gefällte Polymerpulver auf Basis eines Polyamides des AABB-Types, erhältlich durch die Umfällung von durch Polykondensation von Diaminen und Dicarbonsäuren erhaltenen Polyamiden, wobei die Polyamide zumindest teilweise gelöst werden und anschließend ein durchgängiges Abkühlen der Lösung bis unterhalb der Fälltemperatur vorgenommen wird. Die Polyamide werden hergestellt durch Polykondensation von Diaminen mit Dicarbonsäuren. Die erhaltenen gefällten Polyamide können in schichtweisen, formgebenden Verfahren wie das selektive Laser-Sintern eingesetzt werden.

## Beschreibung

Die vorliegende Erfindung betrifft gefällte Polymerpulver auf Basis eines Polyamides des AABB-Types, hergestellt durch Polykondensation von Diaminen mit Dicarbonsäuren, Verfahren zu ihrer Herstellung, Verfahren zur schichtweisen Herstellung von dreidimensionalen Objekten, die Verwendung dieser Pulvers in formgebenden Verfahren zur schichtweisen Herstellung dreidimensionaler Objekte sowie dreidimensionale Objekte (Formkörper), hergestellt durch ein schichtweise arbeitendes Verfahren, mit welchem selektiv Bereiche einer Pulverschicht aufgeschmolzen werden, unter Verwendung dieser Pulvers.

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Ein Verfahren, welches besonders gut für den Zweck des Rapid Prototypings geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Schriften US 6,136,948 und WO 96/06881 beschrieben. Eine Vielzahl von Polymeren und Copolymeren wird für diese Anwendung beansprucht, wie z.B. Polyacetat, Polypropylen, Polyethylen, lonomere und Polyamide.

Andere gut geeignete Verfahren sind das SIV-(selektives Inhibieren des Verbindens) Verfahren wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht.

Für die genannten Rapid-Prototyping- bzw. Rapid-Manufacturing-Verfahren (RP-oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid oder Gemische davon eingesetzt werden.

In WO 95/11006 wird ein für das Lasersintern geeignetes Polymerpulver beschrieben, das bei der Bestimmung des Schmelzverhaltens durch Dynamische Differenz-Kalorimetrie (Differential Scanning Calorimetry, DSC) bei einer Scanning Rate von 10-20 C/min keine Überlappung des Schmelze- und Rekristallisationspeaks zeigt, einen ebenfalls durch DSC bestimmten Kristallinitätsgrad von 10 - 90 % aufweist, ein zahlenmäßiges Mittel des Molekulargewichtes Mn von 30000 - 500000 hat und dessen Quotient Mw/Mn im Bereich von 1 bis 5 liegt.

DE 197 47 309 beschreibt die Verwendung eines Polyamid 12-Pulvers mit erhöhtem Schmelzepeak und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid des AB-Typs. Die Wärmeformbeständigkeit der daraus durch einen Sinterprozess gebildeten Formteile liegt allerdings nicht wesentlich über der von PA12-Spritzgußteilen.

Die nach DE 102004020453 erhältlichen Pulver auf der Basis von AABB-Polyamiden erlauben die Herstellung höher wärmeformbeständiger Formteile; ihr Einsatz stößt in der Regel aufgrund des Aufschmelzverhaltens, welches sich im DSC-Thermogramm als Doppelpeak zeigt, auf Probleme.

WO 2011/124278 beschreibt ein Polymerpulver, welches die Erzeugung möglichst zäher Formkörper mit erhöhter Wärmeformbeständigkeit ermöglicht, die in allen schichtweise arbeitenden Verarbeitungsverfahren eingesetzt werden können. Beim Einsatz von z.B. durch Vermahlen hergestellten AABB-Polyamid-Pulvern kommt es beim Lasersintern zu Problemen in der Maßhaltigkeit, Detailgenauigkeit, Oberflächengüte und bei der Verarbeitung im Lasersintern. Die Verarbeitungsprobleme zeigen sich beispielsweise in einem schlechten Pulverauftrag, dem zu kleinen oder gänzlich fehlendem Verarbeitungsfenster bzw. Verarbeitungstemperaturbereich, starker Rauchentwicklung bzw. starken Ausgasungen oder durch Verschmutzen der Anlagen und der daraus resultierenden Schwierigkeiten bei der Prozessführung.

Allgemein stellen sich in zunehmendem Maße neue Forderungen, wonach die mechanischen Eigenschaften der Sinterteile denjenigen von Spritzgussteilen möglichst nahe kommen sollen; insbesondere die Zähigkeit der Sinterteile aus Pulvern nach dem Stand der Technik ist noch nicht zufriedenstellend. Auch an die Wärmeformbeständigkeit werden immer höhere Anforderungen gestellt. Die nach DE 102004020453 erhältlichen Pulver auf der Basis von AABB-Polyamiden erlauben die Herstellung höher wärmeformbeständiger Formteile, deren Zähigkeit ist jedoch nicht ausreichend.

Aufgabe der vorliegenden Erfindung war es deshalb, ein Polymerpulver auf Basis von AABB-Polyamiden bereitzustellen, welches die Erzeugung möglichst maßhaltiger, detailgetreuer Formkörper mit guten Oberflächen und an die Anforderungen angepassten mechanischen Eigenschaften ermöglicht, die in allen schichtweise arbeitenden Verarbeitungsverfahren eingesetzt werden können.

Überraschenderweise wurde nun gefunden, dass Polymerpulver auf Basis von AABB-Polyamiden, die ein spezifiziertes Schmelzverhalten aufweisen, besonders gut für Laser-Sinter-Verfahren geeignet sind.

Ein erster Gegenstand der vorliegenden Erfindung sind deshalb Polymerpulver auf Basis von Polyamiden des AABB-Types erhältlich durch die Umfällung von durch Polykondensation von Diaminen und Dicarbonsäuren erhaltenen Polyamiden, wobei die Polyamide zumindest teilweise gelöst werden und anschließend ein durchgängiges Abkühlen der Lösung bis unterhalb der Fälltemperatur vorgenommen wird. Die erhaltenen, erfindungsgemäßen Polymerpulver weisen eine mittels DSC ermittelte einheitliche Schmelztemperatur auf. Vorzugsweise erfolg ein vollständiges Lösen der Polyamide, wobei unter vollständigem Lösen eine zumindest optisch klare Lösung verstanden wird. Die Schmelztemperatur wird auch als Kristallitschmelzpunkt bezeichnet.

Unter dem Begriff "einheitlich" werden Schmelztemperaturen verstanden, die im Thermodiagramm (Auftrag Temperatur gegen Wärmestrom) lediglich ein einziges endothermes Maximum (einen einzigen Peak) zeigen, der dem Schmelzvorgang zugeordnet werden kann.

Das zumindest teilweise Lösen des Polyamids erfolgt bei einer Lösetemperatur, welche der Fachmann durch wenige Versuche ermitteln kann. Anschließend erfolgt ein durchgängiges Abkühlen unterhalb der Fälltemperatur, wodurch das gefällte Polyamid erhalten wird.

Im Stand der Technik werden Feinpulver üblicherweise bei einer Lösetemperatur zumindest teilweise gelöst. Anschließend erfolgt ein Abkühlen auf eine Temperatur, bei der sich erste Keime des Pulvers bilden (Keimbildungstemperatur). Erst anschließend erfolgt ein weiteres Absenken der Temperatur zumindest auf die Fälltemperatur. Durch den zusätzlichen Schritt, zunächst bei einer Keimbildungstemperatur, bei der es nicht zu einer vollständigen Fällung kommt, zu verharren, wird kein durchgängiges Abkühlen im Sinne der Erfindung durchgeführt. Vielmehr wird eine Art zweistufige Fällung vorgenommen. Das erhaltene Pulver weist mindestens zwei Schmelzpunkte und damit keine einheitliche Schmelztemperatur auf.

Bei Einsatz der erfindungsgemäßen Polymerpulver lassen sich die vorab genannten Probleme vermeiden und darüber hinaus an die Anforderungen angepasste mechanische Kennwerte aufweisen. Im Vergleich zu einem Polymerpulver nach dem Stand der Technik, beispielsweise nach DE 197 47 309 oder auch

DE 102004020453, kann gemäß der vorliegenden Erfindung je nach eingesetztem AABB-Typ z. B. die Reißdehnung erhöht, das E-Modul erhöht oder verringert sein.

Unter Polyamiden des AABB-Typs werden im Rahmen der vorliegenden Erfindung solche Polyamide verstanden, die auf Diaminen und Dicarbonsäuren basieren. Es handelt sich dabei insbesondere um Homopolymere mit der allgemeinen Formel:

(NH - (CH₂)ₓ - NH - CO - (CH₂)_{y}- CO)_{n/2}

mit n = 20 - 200 und mit x, y = 2 bis 20.

Die AABB-Polyamide der vorliegenden Erfindung enthalten allenfalls geringe Anteile an AB-Polyamiden. Geringe Anteile an AB-Polyamide sind vorzugsweise maximal 5 Gew.-% AB-Polyamide, bevorzugt maximal 2 Gew.-%, besonders bevorzugt maximal 1 Gew.-%, ganz besonders bevorzugt maximal 0,5 Gew.-% und insbesondere 0 Gew.-% AB-Polyamide, jeweils bezogen auf das Gesamtgewicht aus AABB-Polyamiden und AB-Polyamiden.

Die Nomenklatur der Polyamide wird in der ISO 1874-1 geregelt. Insbesondere im Anhang A wird die Definition und Kennzeichnung aliphatischer linearer Polyamide beschrieben. Polyamide des AABB-Typs, die aus der Polykondensation von Diaminen mit Dicarbonsäuren erhalten werden, sind mit einer Kurzbeschreibung des Typs XY bezeichnet, wobei X und Y jeweils die Kettelänge der Kohlenstoffkette der Monomereinheit beschreiben, das heißt mit X ist die Anzahl der C-Atome im Diamin, mit Y die Anzahl der C-Atome in der Dicarbonsäure gemeint.

Die erfindungsgemäßen Polymerpulver basieren insbesondere auf Polyamiden des AABB-Typs, vorzugsweise basieren diese auf Diaminen und Dicarbonsäuren mit jeweils 4-18 Kohlenstoffatomen, bevorzugt 6 bis 14 Kohlenstoffatomen, in der jeweiligen Monomereinheit. Dabei kann das AABB-Polyamid völlig linear oder leicht verzweigt sein. Leicht verzweigt bedeutet, dass eine Monomereinheit ein bis drei Methyl- oder Ethylgruppen aufweisen kann. Vorzugsweise basiert das AABB-Polyamid auf aliphatischen linearen Monomeren. Bevorzugt sind die Diamine ausgewählt aus der Gruppe umfassend Decandiamin (x = 10), Undecandiamin (x = 11) oder 1,12-Diaminododecan (x = 12). Bevorzugt sind die Dicarbonsäuren ausgewählt aus der Gruppe umfassend Sebazinsäure (Decandisäure, y = 8), Dodecandisäure (y = 10), Brassylsäure (y = 11) oder Tetradecandisäure (y = 12), wobei y die Anzahl der C-Atome zwischen den beiden terminalen Carboxylgruppen angibt. Besonders bevorzugt sind Dicarbonsäuren mit y= 10 oder y = 11 gemäß der oben genannten Formel..

Die genannten Diamine und Dicarbonsäuren können in beliebiger Kombination zueinander eingesetzt werden. Insbesondere bevorzugt handelt es sich bei den Polyamiden des AABB-Typs um PA610, PA612, PA613, PA618, PA106, PA1010, PA1012, PA1018, PA1212, PA1218 und PA1013, wobei jene vom Typ 6.13, 6.18, 10.13 und 12.18 insbesondere bevorzugt sind.

Weiterhin kann das Polyamid des AABB-Typs sowohl einen Überschuss an Säureendgruppen, eine Gleichverteilung oder ein Unterschuss an Säureendgruppen gegenüber den Aminoendgruppen aufweisen. Besonders bevorzugt ist ein ausgeglichenes Verhältnis zwischen Säure- und Aminoendgruppen. Weiterhin bevorzugt ist ein Säureüberschuss mit einem molaren Verhältnis von Säureendgruppen zu Aminoendgruppen von 1,2:1 bis 5:1. Ebenfalls bevorzugt ist ein Überschuss der Aminoendgruppen mit einem Verhältnis von Amin zu Säure von 1,2:1 bis 5:1. Die Einstellung der genannten Endgruppenverhältnisse kann auf einfache, dem Fachmann bekannte Art erfolgen. Beispielsweise können bei der Polykondensation spezielle Regler nach dem Stand der Technik zugegeben werden. Beispiele entsprechender Regler sind Überschüsse der zuvor definierten Diamine bzw. der zuvor definierten Dicarbonsäuren.

Es können auch andere Diamine wie lineare Diamine mit 6 - 14 C-Atomen, cyloaliphatische Diamine wie Bis(p-aminocyclohexyl)methan oder Isophorondiamin, lineare Dicarbonsäuren mit 6 - 18 C-Atomen, aromatische Dicarbonsäuren wie Terephthalsäure oder Isopthalsäure, Naphthalindicarbonsäuren, aliphatische Monoamine wie Laurylamin oder Triacetondiamin, oder aliphatische Monocarbonsäuren mit 2 - 22 C-Atomen wie Essigsäure, Laurinsäure, Myristinsäure, Palmitinsäure, Stearinsäure, Ölsäure oder Erucasäure als Regler eingesetzt werden.

Geeignete Polyamide der vorliegenden Erfindung weisen ein zahlenmittleres Molekulargewicht von 8000 bis 50000 g/mol auf, gemessen durch Gelpermeationschromatographie gegen Styrolstandard.

Wesentliches Kriterium der erfindungsgemäßen Polymerpulver ist, dass sie eine mittels DSC ermittelte einheitliche Schmelztemperatur aufweisen, das heißt in der DSC wird bei den erfindungsgemäßen Pulvern lediglich eine einzige Schmelztemperatur gemessen, während dies bei Pulvern gemäß Stand der Technik nicht der Fall ist. Die DSC-Messung erfolgt gemäß DIN 53765 bei einer Heizrate von 20 K / min.

Die Lösungsviskosität der erfindungsgemäßen Polymerpulver beträgt bevorzugt 1,4 bis 2,1, besonders bevorzugt 1,5 bis 1,9, und ganz besonders bevorzugt zwischen 1,6 und 1,7, bestimmt in 0,5%iger m-Kresollösung nach DIN 53727.

Das erfindungsgemäße Polymerpulver weist vorzugsweise eine mittlere Partikelgröße (d50) von 10 bis 250 µm, vorzugsweise von 25 bis 150 µm und besonders bevorzugt von 40 bis 125 µm auf. Die Bestimmung der Partikelgröße erfolgt mittels eines Malvern Mastersizer 2000, Trockenmessung, 20-40 g Pulver mittels Scirocco Trockendispergiergerät zudosiert. Die Zuführrate in einer Rüttelrinne beträgt 70 %, der Dispergierluftdruck 3 bar. Die Messzeit der Probe beträgt 5 Sekunden (5000 Einzelmessungen), der Brechungsindex und Blaulichtwert werden mit 1,52 festgelegt, die Auswertung erfolgt über Mie-Theorie.

Das erfindungsgemäße Polymerpulver weist weiterhin vorzugsweise Schüttdichten zwischen 300 und 700 g/l auf, bevorzugt zwischen 400 und 600 g/l, bestimmt nach DIN EN ISO 60.

Außerdem weisen die erfindungsgemäßen Polymerpulver vorzugsweise BET-Oberflächen zwischen 1 und 15 m²/g auf, besonders bevorzugt zwischen 2 und 10 m²/g und ganz besonders bevorzugt zwischen 2,5 und 7 m²/g, gemessen mit Stickstoffgas nach DIN 9277 (volumetrisches Verfahren) auf.

Die erfindungsgemäßen Polymerpulver werden durch Umfällung von AABB-Polyamiden erhalten. Demgemäß ist ein weiterer Gegenstand der vorliegenden Erfindung ein Verfahren zur Herstellung von Polymerpulvern auf Basis von Polyamiden des AABB-Types umfassend die Umfällung von durch Polykondensation von Diaminen und Dicarbonsäuren erhaltenen Polyamiden des AABB-Typs (Polymer-Verfahren). Die Polyamide des AABB-Typs werden zunächst zumindest teilweise, vorzugsweise vollständig, gelöst und anschließend durch ein durchgängiges Abkühlen der Lösung (ohne Unterbrechung) bis unterhalb der Fälltemperatur gebracht. Somit lassen sich durch die Umfällung Polymerpulver bereitstellen, die einheitlich schmelzende Pulver darstellen und die zu dreidimensionalen Objekten (Formteilen) mit hoher Wärmeformbeständigkeit verarbeitet werden können.

Dabei weist das erfindungsgemäße umgefällte Polymerpulver eine mittels DSC ermittelte einheitliche Schmelztemperatur auf. Diese wird durch Umfällen erreicht und unterscheidet sich von beispielsweise entsprechenden granulattypischen Schmelztemperaturen, vorzugsweise liegt die Schmelztemperaturen der umgefällten Pulver höher als die Temperaturen der Granulate.

In dem erfindungsgemäßen Polymer-Verfahren erfolgt die Umfällung der AABB-Polyamide. Bevorzugt erfolgt die Umfällung aus alkoholischer Lösung. Weiterhin ist es bevorzugt, die Umfällung unter Druck durchzuführen. In einer besonders bevorzugten Ausführungsform der Erfindung erfolgt die Umfällung aus alkoholischer Lösung unter Druck, wie beispielsweise in DE-OS 3510689, DE 29 06 647 B1 oder durch DE 19708146 beschrieben. Grundsätzlich eignen sich alle dem Fachmann bekannten Alkohole als Lösemittel bei Umfällung, bevorzugt werden Monoalkohole mit 1 bis 8 Kohlenstoffatomen, besonders bevorzugt mit 1 bis 4 Kohlenstoffatomen und ganz besonders bevorzugt Ethanol als Lösemittel verwendet. Der Druck liegt vorzugsweise im Bereich von 4 bis 16, und bevorzugt im Bereich von 8 bis 12 bar. Die eingesetzten AABB-Polyamide können dabei in beliebiger Form vorliegen, insbesondere bevorzugt werden entsprechende Granulate eingesetzt. So werden geeignete Ausgangsgranulate kommerziell, beispielsweise von der Evonik-Industries AG, Marl, Deutschland (z.B. Polyamid 612, Handelsnamen Vestamid D-Reihe) oder von der EMS Chemie, Donat, Schweiz (z. B. Technyl D, Polyamid 610) vertrieben.

Der Druck entsteht üblicherweise durch den Dampfdruck des Lösemittels in einem geschlossenen System. Übliche Drücke sind 1 bis 15 bar.

Zur Durchführung der Umfällung werden die durch Polykondensation aus Diaminen und Dicarbonsäuren erhaltenen Polyamide des AABB-Typs in einem ersten Schritt in dem Lösemittel zumindest teilweise gelöst, und dann in einem nachfolgenden Schritt aus der Lösung ausgefällt. Vorzugsweise liegen die zur Umfällung eingesetzten Polyamide des AABB-Typs zu einem Anteil von mindestens 5 Gew.-%, vorzugsweise mindestens 10 Gew.-%, besonders bevorzugt von mindestens 15 Gew.-% in dem Lösemittel gelöst vor (bezogen auf das Gesamtgewicht der Lösung). Die Lösetemperaturen im ersten Schritt liegen im Bereich von 120-190 °C, vorzugsweise von 140-175 °C.

Die erhaltenen Lösungen werden dann im zweiten Schritt der Umfällung mit Abkühlraten im Bereich von 0,1 - 2,0 K/min, vorzugsweise im Bereich von 0,4 - 1,0 K/min abgekühlt. Die Fälltemperaturen der Polymerpulver gemäß der vorliegenden Erfindung können im Bereich von 100 - 150 °C liegen, vorzugsweise im Bereich von 105-135 °C. Im konkreten Einzelfall können die für das jeweilige Polyamidgemisch günstigen Löse- und Fällbedingengen durch Handversuche ermittelt werden. Die zu wählenden Polyamidkonzentrationen (Polyamidanteile) der Lösungen betragen 5 - 30 Gew.-% bezogen auf das Gesamtgewicht der Lösung, bevorzugt 10 - 25 Gew.-%, besonders bevorzugt 13 - 22 Gew.-%. Die zur Erreichung einer optisch klaren Polyamidlösung erforderlichen Lösetemperaturen sind durch Vorversuche zu ermitteln.

Durch den erfindungsgemäßen Umfällungsprozess werden Polymerpulver von Polyamiden des AABB-Typs bereitgestellt, die sich durch eine mittels DSC ermittelte einheitliche Schmelztemperatur auszeichnen. Zudem ist die Schmelzenthalpie der erfindungsgemäßen Polymerpulver um 10%, bevorzugt um 25% sowie besonders bevorzugt um 40% höher als im eingesetzten Ausgangsstoff, d.h. des vor der Umfällung eingesetzten Polyamids des AABB-Typs. Gegebenenfalls wird eine Schutzsiebung und weitere Klassierung oder Kaltmahlung angeschlossen. Der Fachmann kann die Bedingungen leicht durch orientierende Vorversuche herausfinden.

Die Schmelzenthalpie wird bestimmt mittels DSC analog zu der bereits genannten Norm.

Zur Gewinnung von Polyamidpulver mit engerer Kornverteilung ist es möglich, der eigentlichen Fällung eine Keimbildungsphase gemäß DE 19708949 voran zu schalten wird, in der die Polyamid-Lösung optisch klar bleibt und keine exotherme Kristallisation beobachtet wird. Hierzu wird die alkoholische Lösung 2 K bis 20 K, vorzugsweise 5 K bis 15 K über der späteren Fälltemperatur isotherm über die vorgenannte Zeit hinweg gerührt und die Temperatur mit den obigen Kühlraten dann auf die möglichst konstant zu haltende Fälltemperatur abgesenkt. Geeignete Aggregate sind Rührkessel, vorzugsweise werden Blattrührer eingesetzt. Es ist jedoch ohne Weiteres möglich, die Fällung in anderen druckfesten Apparaten durchzuführen und/oder andere Rührorgane einzusetzen. Zur Entfernung eventuell bei der späteren Verarbeitung störender Restmonomere bzw. Oligomeren kann eines oder mehrere der umzufällenden Polyamide zuvor einer Extraktion unterzogen werden.

Die zuvor beschriebenen Merkmale des erfindungsgemäßen Polymer-Verfahrens gelten analog für das erfindungsgemäße Polymer, das nach dem zuvor beschriebenen Verfahren herstellbar ist.

Die erfindungsgemäßen Polymerpulver eignen sich in besonderer Weise zur schichtweisen Herstellung von dreidimensionalen Objekten. Somit ist ein weiterer Gegenstand der vorliegenden Erfindung ein Verfahren zur schichtweisen Herstellung von dreidimensionalen Objekten, wobei erfindungsgemäße Polymerpulver eingesetzt werden (Schichtverfahren). Im Rahmen des erfindungsgemäßen Schichtverfahrens wird das erfindungsgemäße Polymerpulver aufgetragen und selektiv Bereiche der jeweiligen Schicht aufgeschmolzen. Anschließend kann eine weitere Schicht des erfindungsgemäßen Polymerpulvers aufgetragen werden und ebenfalls wieder selektiv aufgeschmolzen werden. Auf diese Weise wird erfindungsgemäß ein dreidimensionales Objekt durch schichtweisen Aufbau hergestellt. Nach Abkühlen und Verfestigen der zuvor Schicht für Schicht aufgeschmolzenen Bereiche kann das erhaltene dreidimensionale Objekt, nachfolgend auch Formkörper genannt, dem Pulverbett entnommen werden.

Die erfindungsgemäßen Polymerpulver haben den Vorteil, dass aus ihnen durch schichtweise arbeitende Verfahren, bei denen selektiv Bereiche der jeweiligen Schicht aufgeschmolzen werden, Formkörper mit einer erhöhten Wärmeformbeständigkeit, höheren Zähigkeitswerten, besserer Formtreue und eine besseren Oberflächenqualität gegenüber Formkörpern aus herkömmlichen Polyamidpulvern hergestellt werden können.

Grundsätzlich eignen sich die erfindungsgemäßen Polymerpulver für alle dem Fachmann bekannten Rapid-Prototyping- bzw. Rapid-Manufacturing-Verfahren (RP-oder RM-Verfahren). Hierzu eignen sich grundsätzlich alle Arten von Strahlung, insbesondere Teilchenstrahlung, Photonenstrahlung und/oder elektromagnetische Strahlung, wobei Kombinationen der genannten Strahlungen in beliebiger Reihenfolge oder auch gleichzeitig verwendet werden können. Die Selektivität wird beispielsweise durch Masken, Auftragung von Inhibitoren, Absorbern, Suszeptoren, oder aber durch eine Fokussierung der Strahlung, wie aus dem Stand der Technik bekannt, erzielt.

Das Schichtverfahren kann nach bekannten Methoden wie SIV oder SLS, vorzugsweise SLS, durchgeführt werden.

Vorteilhafterweise wird die Energie durch elektromagnetische Strahlung eingebracht. Die elektromagnetische Strahlung kann kohärent oder nicht kohärent und/oder monochromatisch oder nicht monochromatisch und/oder gerichtet oder nicht gerichtet sein. Das sichtbare Licht sei ein Sonderfall der elektromagnetischen Strahlung, welches eine Wellenlänge im für das menschliche Auge sichtbaren Bereich, d. h. zwischen 380 und 780 nm, aussendet. Die elektromagnetische Strahlung kann im Bereich des sichtbaren Lichts liegen, im Nah-, Mittel-, oder Ferninfrarotbereich sowie im Ultraviolettbereich (10 bis 380 nm), bevorzugt im sichtbaren Bereich oder im Nahinfrarotbereich. Die Übertragung der Energie erfolgt über Konvektion und über Strahlung, wobei letzteres bevorzugt ist. Im einfachsten Fall handelt es sich um Heizstrahler oder Lampen. Diese können, ohne die Erfindung darauf beschränken zu wollen, ausgewählt sein aus Glühlampen, Halogenlampen, Leuchtstofflampen oder Hochdruckentladungslampen. Die Strahlungsquelle kann daher ein Glühdraht sein, beispielsweise mit einer oder zwei Wendeln, und die Ausführung kann eine Glühlampe oder eine Halogenglühlampe sein; das Spektrum der abgegebenen Strahlung reicht eher in den infraroten als in den ultravioletten Bereich. Die Lampenfüllung kann verschiedene Gase und Dämpfe, bei den Halogenglühlampen Halogene, aufweisen oder auch als Vakuum ausgebildet sein. Eine weitere Ausführungsart ist die Verwendung von Gasentladungen als Strahlungsquelle, wobei eine Hochdruckentladung und eine Niederdruckentladung bekannte Wirkungsprinzipien sind. Die Gasentladungslampen sind mit einem Grundgas gefüllt; das können Metallgase oder Edelgase sein, beispielsweise Neon, Xenon, Argon, Krypton, und Quecksilber, auch dotiert mit beispielsweise Eisen oder Gallium sowie Dämpfe enthaltend Quecksilber, Metallhalogeniden, Natrium, Seltenerden. Je nach Ausführung heißen sie Quecksilberdampf-Hochdrucklampen, Halogen-Metalldampflampen, Natriumdampf-Hochdrucklampen, Xenon-Langbogenlampen, Natriumdampf-Niederdrucklampen, UV-Lampen, Leuchtstofflampen oder Leuchtröhren. Ferner können Mischlichtlampen, bei denen eine Glühlampe mit einer Quecksilberdampf-Hochdrucklampe kombiniert wird, verwendet werden. Die Strahlungsquelle kann auch als Festkörperentladung ausgeführt sein; dann handelt es sich um sogenannte Leuchtplatten (Elektroluminiszenzplatten). Auch Leuchtdioden, die nach dem Prinzip der Elektroluminiszenz mit direkten Halbleiterübergängen oder indirekten Übergängen mit isoelektronischen Rekombinationszentren funktionieren, seien genannt. Um beispielsweise in Quecksilberdampf-Niederdrucklampen die UV-Strahlung in sichtbares Licht umzuwandeln, werden sogenannte Leuchtstoffe verwendet. Diese sind sehr reine Kristalle, die mit genau definierten Verunreinigungen versehen sind (Dotierung). Meist handelt es sich bei den anorganischen Kristallen um Phosphate, Silikate, Wolframate, Vanadate, die einzeln, aber auch in Kombination, Verwendung finden. Falls ein Heizstrahler verwendet wird, strahlt er bevorzugt im Nah- oder Mittelinfrarotbereich, wobei der Nahinfrarotbereich (Infrarot A) eine Wellenlänge von 780 nm bis 1400 nm umfasst, und der Mittelinfrarotbereich (IR-B) eine Wellenlänge von 1400 nm bis 3000 nm. Auch der Ferninfrarotbereich (IR-C) mit einer Wellenlänge von 3000 nm bis 1 mm findet Verwendung, jedoch muss hier eine sorgfältige Abstimmung des Substrates und des dann vorteilhafterweise einzusetzenden Absorbers erfolgen, da bei der Verwendung von Kunstoffen als Substrat auch das Substrat bei IR-C selbst zum Versintern ausreichend Energie absorbieren kann. Dem kann durch die geeignete Auswahl an Substrat, bzw. Einstellen des Unterschiedes in der Absorption zwischen mit Absorber belegten Bereichen und unbehandelten Bereichen, erreicht werden. Bevorzugt ist jedoch der Nah- und Mittelinfrarotbereich. Der Heizstrahler für den Infrarot-Bereich umfasst kurzwellige IR-Strahler, zum Beispiel Halogen-IR-Strahler, Quarzrohrstrahler, sowie Keramik- oder Metallrohr-Strahler. Die Strahlungsquellen können ein breites Spektrum bezüglich der Wellenlängen abstrahlen, wobei der Schwerpunkt im sichtbaren Bereich, im Infrarotbereich oder im Ultraviolettbereich liegen kann, oder aber Strahlen bei nahezu diskontinuierlichen einzelnen schmalen Wellenlängenbereichen abgeben. Als Beispiel sei die Natriumdampf-Niederdrucklampe genannt, die fast ausschließlich Strahlung im Bereich von 560 bis 600 nm abgibt. Bevorzugt werden der Absorber und die verwendete Strahlungsquelle aufeinander abgestimmt. Die Leistung kann je nach Strahlungsquelle zwischen 10 und 10000 Watt liegen. Typische Farbtemperaturen liegen zwischen 800 und 10000 K. Die Strahlungsquelle kann punktförmig, linienförmig oder flächig sein. Es können auch mehrere Strahlungsquellen miteinander kombiniert werden. Zur besseren Ausnutzung der Energie können Reflektoren oder Refraktoren verwendet werden. Ferner können Blenden verwendet werden, um die Strahlung besser ausrichten zu können.

Vorzugsweise handelt es sich bei den Verfahren zur schichtweisen Herstellung von dreidimensionalen Objekten um selektive Laser-Sinter-Verfahren. Die Laser-Sinter-Verfahren sind hinlänglich bekannt und beruhen auf dem selektiven Sintern von Polymerpartikeln, wobei Schichten von Polymerpartikeln kurzzeitig einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z.B. den Schriften US 6,136,948 und WO 96/06881 zu entnehmen. Geeignete Laser für die bevorzugten Laser-Sinter-Verfahren sind insbesondere CO₂-Laser. Nach dem Abkühlen aller Schichten kann der erfindungsgemäße Formkörper entnommen werden.

In den erfindungsgemäßen Schichtverfahren können die Polymerpulver gemäß der vorliegenden Erfindung zusätzlich Hilfsstoffe und/oder Füllstoffe und/oder organische und/oder anorganische Pigmente aufweisen. Solche Hilfsstoffe können z. B. Rieselhilfsmittel, wie z. B. gefällte und/oder pyrogene Kieselsäuren sein. Gefällte Kieselsäuren werden zum Beispiel unter dem Produktnamen AEROSIL®, mit unterschiedlichen Spezifikationen, durch die Evonik Industries AG angeboten. Vorzugsweise weist das erfindungsgemäß eingesetzte Polymerpulver weniger als 3 Gew.-%, bevorzugt von 0,001 bis 2 Gew.-% und ganz besonders bevorzugt von 0,05 bis 1 Gew.-% solcher Hilfsstoffe, bezogen auf das Gesamtgewicht der vorhandenen Polymere auf. Die Füllstoffe können z. B. Glas-, Metall- oder Keramikpartikel, wie z. B. Glaskugeln, Stahlkugeln, Metallgrieß oder Fremdpigmente, wie z. B. Übergangsmetalloxide sein. Die Pigmente können beispielsweise ausgewählt werden aus Titandioxidpartikeln basierend auf Rutil oder Anatas oder Russpartikeln.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/ Rapid Manufacturing-Anlage.

Vorzugsweise weist das erfindungsgemäß eingesetzte Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf das Gesamtgewicht der vorhandenen Polyamide, auf.

Beim Überschreiten der angegebenen Höchstgrenzen für Hilfs- und/oder Füllstoffe kann es, je nach eingesetztem Füll- oder Hilfsstoff, zu Verschlechterungen der mechanischen Eigenschaften der erhaltenen Formkörper kommen.

Es ist ebenso möglich, herkömmliche Polymerpulver mit erfindungsgemäßen Polymerpulvern zu mischen. Auf diese Weise lassen sich Polymerpulver mit einer weiteren Kombination von Oberflächeneigenschaften herstellen. Das Verfahren zur Herstellung solcher Mischungen kann z. B. DE 34 41 708 entnommen werden.

Zur Verbesserung des Schmelzeverlaufs bei der Herstellung der Formkörper kann ein Verlaufsmittel wie beispielsweise Metallseifen, bevorzugt Alkali- oder Erdalkalisalze der zugrunde liegenden Alkanmonocarbonsäuren oder Dimersäuren, dem erfindungsgemäßen Polyamidpulver zugesetzt werden. Die Metallseifenpartikel können in die Polymerpartikel eingearbeitet werden.

Die Metallseifen werden in Mengen von 0,01 bis 30 Gew.-%, vorzugsweise 0,5 bis 15 Gew.-%, bezogen auf das Gesamtgewicht der im Pulver vorhandenen Polyamide eingesetzt. Bevorzugt werden als Metallseifen die Natrium- oder Calciumsalze der zugrundeliegenden Alkanmonocarbonsäuren oder Dimersäuren eingesetzt. Beispiele für kommerziell verfügbare Produkte sind Licomont NaV 101 oder Licomont CaV 102 der Firma Clariant.

Die aus dem erfindungsgemäßen Pulver hergestellten Formkörper weisen dabei an die Anforderungen angepasste mechanische Eigenschaften auf. Auch die Verarbeitungsfähigkeit des erfindungsgemäßen Pulvers ist vergleichbar mit der von herkömmlichen Polyamidpulvern.

Ein weiterer Gegenstand ist die Verwendung der erfindungsgemäßen Pulver zur schichtweisen Herstellung dreidimensionaler Objekte oder Formkörper. Hierbei kann das erfindungsgemäße Schichtverfahren herangezogen werden.

Dreidimensionale Objekte (Formkörper), hergestellt durch das erfindungsgemäße Schichtverfahren zur schichtweisen Herstellung von dreidimensionalen Objekten unter Einsatz erfindungsgemäßer Polymerpulver sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

Im Rahmen der vorliegenden Erfindung wurden folgende Messverfahren eingesetzt:

| **Messgröße** | **Einheit** | **Prüfart/Prüfgerät/Prüfparameter** |
|---|---|---|
| Schüttdichte | g/cm³ | DIN EN ISO 60 |
| Korngröße d50 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | µm | Malvern Mastersizer 2000, Parameter siehe Korngröße d50 |
| Korngröße d90 | µm | Malvern Mastersizer 2000, Parameter siehe Korngröße d50 |
| Massenanteil einer Korngröße < 10,48µm | % | Malvern Mastersizer 2000, Parameter siehe Korngröße d50 |
| Fließfähigkeit | S | DIN EN ISO 6186, Verfahren A, Durchmesser Düsenauslauf 15mm |
| Lösungsviskosität | - | ISO 307, Schott AVS Pro, Lösemittel *m*-Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | °C | DIN 53765 DSC 7 v. Perkin Elmer Heiz-/Kühlrate 20K/min |
| Rekristallisationstemperatur | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | |

Als Messgerät für die Bestimmung von Schmelz- und Rekristallisationstemperatur wurde das Gerät Perkin Elmer Diamond oder DSC 7 eingesetzt (DDLK-Prinzip). Es wurden 6 bis 8 mg der Probe nicht gepiercten Tiegel mit aufgelegtem Deckel gegeben. Stickstoff mit einer Durchflussrate von 20 mL/min diente als Spülgas. Die Probe wurde von -30 °C auf 270 °C aufgeheizt und der Kristallitschmelzpunkt bestimmt. Die Enthalpiebestimmung erfolgt über eine Auswertung der linearen Verbindungslinie entsprechend der genannten Norm DIN 53765.

### Synthesebeispiel 1 (PA1010):

Zur Herstellung eines PA 1010 wurde ein 200 I-Rührautoklav mit folgenden Einsatzstoffen beschickt:

| | |
|---|---|
| 34,957 kg | 1,10-Decandiamin (als 98,5 %ige wässrige Lösung), |
| 40,902 kg | Sebacinsäure sowie |
| 8,6 g | einer 50 %-igen wässrigen Lösung von hypophosphoriger Säure (entspricht 0,006 Gew.-%) mit |
| 25,3kg | VE-Wasser |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 270 °C aufgeheizt und danach 1,5 Stunden im Stickstoffstrom bei dieser Temperatur gehalten. Anschließend wurde innerhalb von 3 Stunden auf Atmosphärendruck entspannt und weitere 3 Stunden Stickstoff über die Schmelze geleitet, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 80 °C getrocknet.

| | |
|---|---|
| Austrag: | 65 kg |
| Das Produkt weist folgende Kennwerte auf: | |
| Kristallitschmelzpunkt Tₘ: | 192 °C und 204 °C |
| Schmelzenthalpie: | 78 J/g |
| Relative Lösungsviskosität ηᵣₑₗ: | 1,76 |

### Synthesebeispiel 2 (PA1012):

In Anlehnung an Beispiel 1 wurden folgende Einsatzstoffe miteinander umgesetzt:

| | |
|---|---|
| 34,689 kg | 1,10-Decandiamin (98,7 %ig), |
| 46,289kg | Dodecandisäure sowie |
| | 9,2 geiner 50 %igen wässrigen Lösung von hypophosphoriger Säure (entspricht 0,006 Gew.-%) mit |
| 20,3kg | VE-Wasser |

| | |
|---|---|
| Austrag | 73,6 kg |
| Das Produkt weist folgende Kennwerte auf: | |
| Kristallitschmelzpunkt Tₘ: | 181 °C (Schulter) und 191 °C |
| Schmelzenthalpie: | 74 J/g |
| Relative Lösungsviskosität ηᵣₑₗ: | 1,72 |

### Synthesebeispiel 3 (PA1013):

In Anlehnung an Beispiel 1 wurden folgende Einsatzstoffe miteinander umgesetzt:

| | |
|---|---|
| 33,521 kg | 1,10-Decandiamin (98,7%ig), |
| 47,384kg | Brassylsäure sowie |
| | 9,5 geiner 50 %igen wässrigen Lösung von hypophosphoriger Säure (entspricht 0,006 Gew.-%) mit |
| 20,5kg | VE-Wasser |

Das Produkt weist folgende Kennwerte auf:

| | |
|---|---|
| Relative Lösungsviskosität ηᵣₑₗ: | 1,66 (Charge 1), 1,77 (Charge 2) |
| Kristallitschmelzpunkt Tₘ: | 183 °C und 188 °C |
| Schmelzenthalpie: | 71 J/g |

### Synthesebeispiel 4 (PA1212):

In Anlehnung an Beispiel 1 wurden folgende Einsatzstoffe miteinander umgesetzt:

| | |
|---|---|
| 33,366 kg | 1,12-Dodecandiamin (als 97,5%ige wässrige Lösung), |
| 37,807 kg | Dodecandisäure sowie |
| | 8,1 geiner 50 %igen wässrigen Lösung von Hypophosphoriger Säure (entspricht 0,006 Gew.-%). mit |
| 20,5kg | VE-Wasser |

Das Produkt weist folgende Kennwerte auf:

| | |
|---|---|
| Kristallitschmelzpunkt Tₘ: | 180 °C und 187 °C |
| Schmelzenthalpie: | 75J/g |
| Relative Lösungsviskosität ηᵣₑₗ: | 1,81 (Charge 1), 1,73 (Charge 2) |

### Synthesebeispiel 5 (PA613):

In Anlehnung an Beispiel 1 wurden folgende Einsatzstoffe miteinander umgesetzt:

| | |
|---|---|
| 34,395 kg | Hexamethylendiamin (71,2%ig), |
| 48,866 kg | Brassylsäure sowie |
| 14,86 g | einer 50 %igen wässrigen Lösung von hypophosphoriger Säure (entspricht 0,006 Gew.-%) mit |
| 16,6 kg | VE-Wasser |

Das Produkt weist folgende Kennwerte auf:

| | |
|---|---|
| Kristallitschmelzpunkt Tₘ: | 193°C und 204 °C |
| Schmelzenthalpie: | 88 J/g |
| Relative Lösungsviskosität ᵣₑₗ: | 1,75 |

### Synthesebeispiel 6 (PA106):

In Anlehnung an Beispiel 1 wurden folgende Einsatzstoffe miteinander umgesetzt:

| | |
|---|---|
| 36,681 kg | 1,10-Decandiamin (98,7 %ig), |
| 30,276 kg | Adipinsäure sowie |
| 12,76 g | einer 50 %igen wässrigen Lösung von hypophosphoriger Säure (entspricht 0,006 Gew.-%) mit |
| 20,3kg | VE-Wasser |

Das Produkt weist folgende Kennwerte auf:

| | |
|---|---|
| Kristallitschmelzpunkt Tₘ: | 216°C und 237 °C |
| Schmelzenthalpie: | 84 J/g |
| Relative Lösungsviskosität ᵣₑₗ: | 1,85 |

### Beispiel 1: Umfällung von Polyamid 12 (PA 12) (nicht erfindungsgemäß)

40 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH2 wurden mit 2500 I Ethanol, vergällt mit 2-Butanon und 1 % Wassergehalt, innerhalb von 2,5 Stunden in einem 8001-Rührkessel auf 145 °C gebracht und unter Rühren 1 Stunde bei dieser Temperatur belassen (Lösetemperatur). Anschließend wurde die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wurde bei gleicher Kühlrate die Manteltempertur 2 K - 3 K unter der Innentemperatur gehalten. Die Innentemperatur wurde mit gleicher Kühlrate auf 117 °C gebracht und dann 60 Minuten konstant gehalten (Keimbildungstemperatur). Danach wurde weiter bei einer Kühlrate von 40 K/h abdestilliert und so die Innentemperatur auf 111 °C gebracht (Fälltemperatur). Bei dieser Temperatur setzte die Fällung, erkennbar an der Wärmeentwicklung, ein. Die Destillationsgeschwindigkeit wurde soweit erhöht, dass die Innentemperatur nicht über 111.3 °C anstieg. Nach 25 Minuten fiel die Innentemperatur ab, was das Ende der Fällung anzeigte. Durch weiteres Abdestillieren und Kühlung über den Mantel wurde die Temperatur der Suspension auf 45 °C gebracht und die Suspension danach in einen Schaufeltrockner überführt. Das Ethanol wurde bei 70 °C/ 400 mbar abdestilliert und der Rückstand anschließend bei 20 mbar/86 °C 3 Stunden nachgetrocknet. Man erhielt ein gefälltes PA 12 mit einem mittleren Korndurchmesser von 55 µm. Die Schüttdichte betrug 435g/l.

### Beispiel 2:Umfällung von PA 1010 (nicht erfindungsgemäß):

Man fällte in Anlehnung Beispiel 1 40kg des in Synthesebeispiel 1 erhaltenen PA 1010-Musters um; die Fällbedingungen wurden dabei folgendermaßen eingestellt:
Lösetemperatur: 155 °C, Keimbildungstemperatur/Zeit: 128 °C/60 min
Fälltemperatur: 120 °C, Fällungszeit: 1 Stunde, Rührerdrehzahl: 90 Upm

| | | |
|---|---|---|
| Kristallitschmelzpunkt Tₘ: | 192 °C und 206 °C | |
| Schmelzenthalpie: | 128 J/g | |
| Relative Lösungsviskosität ηᵣₑₗ: | 1,69 | |
| Schüttdichte | 380g/l. | |
| BET: | 6,80 m²/g | |
| D(10%) = 44µm | D(50%) = 69µm | D(90%) = 103µm |

### Beispiel 3: Umfällung von PA 1012 (nicht erfindungsgemäß):

Man fällte entsprechend Beispiel 1 40 kg des in Synthesebeispiel 2 erhaltenen PA 1012-Granulatmusters um, wobei die Fällbedingungen gegenüber Beispiel 1 folgendermaßen abgeändert wurden:
Lösetemperatur: 155 °C, Keimbildungstemperatur: 141 °C, Fälltemperatur: 123 °C,
Fällungszeit: 40 Minuten, Rührerdrehzahl: 110 Upm

| | | |
|---|---|---|
| Kristallitschmelzpunkt Tₘ: | 191 °C und 202 °C | |
| Schmelzenthalpie: | 148 J/g | |
| Relative Lösungsviskosität ηᵣₑₗ: | 1,69 | |
| Schüttdichte: | 430g/l | |
| BET: | 3,90 m²/g | |
| D(10%)=34µm | D(50%)=65µm | D(90%)=94µm |

### Beispiel 4: Umfällung von PA 1212 (nicht erfindungsgemäß):

Man fällte entsprechend Beispiel 1 40 kg des in Synthesebeispiel 4 erhaltenen PA 1212-Granulatmusters (Charge 1) um, wobei die Fällbedingungen folgendermaßen eingestellt wurden:
Lösetemperatur: 155 °C, Keimbildungstemperatur: 123 °C, Keimbildungszeit: 60 min
Fälltemperatur: 117 °C, Fällungszeit: 60 Minuten, Rührerdrehzahl: 110 Upm

| | | |
|---|---|---|
| Schüttdichte | 392g/l. | |
| BET: | 5,60 m²/g | |
| D(10%)=33µm | D(50%)=75µm | D(90%)=114µm |
| | | |
| Kristallitschmelzpunkt Tₘ: | 187 °C und 194 °C | |
| Schmelzenthalpie: | 143 J/g | |
| Relative Lösungsviskosität ηᵣₑₗ: | 1,79 | |

### Beispiel 5: Umfällung von PA 1013 (nicht erfindungsgemäß):

Man fällte entsprechend Beispiel 1 40 kg des in Synthesebeispiel 3 erhaltenen PA 1013-Granulatmusters (Charge 1) um, wobei die Fällbedingungen folgendermaßen eingestellt wurden:
Lösetemperatur: 145 °C, Keimbildungstemperatur: 113 °C, Keimbildungszeit: 60 min
Fälltemperatur: 102 °C, Fällungszeit: 60 Minuten, Rührerdrehzahl: 110 Upm

| | | |
|---|---|---|
| Schüttdichte | 452g/l. | |
| BET: | 4,40 m²/g | |
| D(10%) = 25µm | D(50%) = 59µm | D(90%) = 94µm |
| Kristallitschmelzpunkt Tₘ: | 182 °C und 190 °C | |
| Schmelzenthalpie: | 143 J/g | |
| Relative Lösungsviskosität ηᵣₑₗ: | 1,62 | |

### Beispiel 6: Umfällen von PA1010 (erfindungsgemäß.)

Man fällt entsprechend Beispiel 1, jedoch ohne Einstellung einer Keimbildungstemperatur, 40 kg des in Synthesebeispiel 1 erhaltenen PA 1010-Granulatmusters um.
Lösetemperatur: 149 °C, Keimbildungstemperatur: keine , Keimbildungszeit: keine
Fälltemperatur: 120 °C, Fällungszeit: 120 Minuten, Rührerdrehzahl: 90 Upm

| | | |
|---|---|---|
| Schüttdichte | 380g/l | |
| BET: | 17,3 m²/g | |
| D(10%) = 53µm | D(50%) = 79µm | D(90%) = 120µm |
| | | |
| Kristallitschmelzpunkt Tₘ: | 209 °C | |
| Schmelzenthalpie: | 154 J/g | |
| Relative Lösungsviskosität ηᵣₑₗ: | 1,74 | |

### Beispiel 7: Umfällen von PA613 (erfindungsgemäß.)

Man fällte entsprechend Beispiel 1, jedoch ohne Einstellung einer Keimbildungstemperatur, 40 kg des in Synthesebeispiel 5 erhaltenen PA 613-Granulatmusters um, wobei die Fällbedingungen folgendermaßen eingestellt wurden:
Lösetemperatur: 156 °C, Keimbildungstemperatur: keine , Keimbildungszeit: keine
Fälltemperatur: 123 °C, Fällungszeit: 120 Minuten, Rührerdrehzahl: 150 Upm

| | | |
|---|---|---|
| Schüttdichte: | 464g/l | |
| BET: | 5,3 m²/g | |
| D(10%) = 47µm | D(50%) = 69µm | D(90%) = 101µm |
| | | |
| Kristallitschmelzpunkt | Tₘ: 210 °C | |
| Schmelzenthalpie: | 137 J/g | |
| Relative Lösungsviskosität ηᵣₑₗ: | 1,70 | |

### Beispiel 8: Umfällen von PA106 (erfindungsgemäß.)

Man fällte entsprechend Beispiel 1, jedoch ohne Einstellung einer Keimbildungstemperatur, 40 kg des in Synthesebeispiel 6 erhaltenen PA 106-Granulatmusters um, wobei die Fällbedingungen folgendermaßen abgewandelt wurden:
Lösetemperatur: 165 °C, Keimbildungstemperatur: keine, Keimbildungszeit: keine
Fälltemperatur: 142 °C, Fällungszeit: 150 Minuten, Rührerdrehzahl: 150 Upm

| | | |
|---|---|---|
| Schüttdichte: | 402g/l. | |
| BET: | 7,9 m²/g | |
| D(10%)=48µm | D(50%)=69µm | D(90%)=101µm |
| | | |
| Kristallitschmelzpunkt Tₘ: | 242 °C | |
| Schmelzenthalpie: | 147 J/g | |
| Relative Lösungsviskosität ηᵣₑₗ: | 1,84 | |

### Beispiel 9: Umfällen von PA1013 (erfindungsgemäß.)

Man fällte entsprechend Beispiel 1, jedoch ohne Einstellung einer Keimbildungstemperatur, 40 kg des in Synthesebeispiel 3 erhaltenen PA 1013-Granulatmusters (Charge 2) um, wobei die Fällbedingungen folgendermaßen eingestellt wurden:
Lösetemperatur: 145 °C, Keimbildungstemperatur: keine, Keimbildungszeit: keine
Fälltemperatur: 102 °C, Fällungszeit: 150 Minuten, Rührerdrehzahl: 190 Upm

| | | |
|---|---|---|
| Schüttdichte: | 482g/l. | |
| BET: | 2,0 m²/g | |
| D(10%) = 32µm | D(50%) = 45µm | D(90%) = 64µm |
| Kristallitschmelzpunkt Tₘ: | 182 °C | |
| Schmelzenthalpie: | 116 J/g | |
| Relative Lösungsviskosität ηᵣₑₗ: | 1,76 | |

### Beispiel 10: Umfällen von PA1212 (erfindungsgemäß)

Man fällte entsprechend Beispiel 1, jedoch ohne Einstellung einer Keimbildungstemperatur, 40 kg des in Synthesebeispiel 4 erhaltenen PA 1212-Granulatmusters (Charge 2) um, wobei die Fällbedingungen folgendermaßen eingestellt wurden:
Lösetemperatur: 155 °C, Keimbildungstemperatur: keine, Keimbildungszeit: keine
Fälltemperatur: 115 °C, Fällungszeit: 120 Minuten, Rührerdrehzahl: 120 Upm

| | | |
|---|---|---|
| Schüttdichte: | 392g/l. | |
| BET: | 1,40 m²/g | |
| D(10%)=25µm | D(50%)=51µm | D(90%)=88µm |
| | | |
| Kristallitschmelzpunkt Tₘ: | 183 °C | |
| Schmelzenthalpie: | 128 J/g | |
| Relative Lösungsviskosität ηᵣₑₗ: | 1,64 | |

## Patentansprüche

1. Polymerpulver auf Basis von Polyamiden des AABB-Types erhältlich durch die Umfällung von durch Polykondensation von Diaminen und Dicarbonsäuren erhaltenen Polyamiden, wobei die Polyamide zumindest teilweise gelöst werden und anschließend ein durchgängiges Abkühlen der Lösung bis unterhalb der Fälltemperatur vorgenommen wird.

2. Polymerpulver gemäß Anspruch 1, **dadurch gekennzeichnet, dass** das Pulver eine einheitliche Schmelztemperatur aufweist.

3. Polymerpulver nach einem der vorherigen Ansprüche, **dadurch gekennzeichnet, dass** die Umfällung aus alkoholischer Lösung vorgenommen wird.

4. Polymerpulver nach einem der vorherigen Ansprüche, **dadurch gekennzeichnet, dass** die Umfällung unter Druck vorgenommen wird.

5. Polymerpulver nach einem der vorherigen Ansprüche, **dadurch gekennzeichnet, dass** die Umfällung durch Abkühlen aus der Lösung bis unterhalb der Fälltemperatur ohne Unterbrechung erfolgt.

6. Polymerpulver nach einem der vorherigen Ansprüche, **dadurch gekennzeichnet, dass** die Polyamide des AABB-Typs auf Diaminen und Dicarbonsäuren mit jeweils 4-18 Kohlenstoffatomen in der jeweiligen Monomereinheit basieren.

7. Polymerpulver nach einem der vorherigen Ansprüche, **dadurch gekennzeichnet, dass** die Diamine ausgewählt sind aus der Gruppe umfassend Decandiamin, Undecandiamin oder 1,12-Diaminododecan.

8. Polymerpulver nach einem der vorherigen Ansprüche, **dadurch gekennzeichnet, dass** die Dicarbonsäuren ausgewählt aus der Gruppe umfassend Sebazinsäure, Dodecandisäure, Brassylsäure oder Tetradecandisäure.

9. Polymerpulver nach einem der vorherigen Ansprüche, **dadurch gekennzeichnet, dass** es sich bei den Polyamiden des AABB-Typs um PA610, PA612, PA613, PA618, PA106, PA1010, PA1012, PA1013, PA1018, PA1212, PA1218 und PA1013 handelt.

10. Verfahren zur Herstellung von Polymerpulvern auf Basis von Polyamiden des AABB-Types, wobei die durch Polykondensation von Diaminen und Dicarbonsäuren erhaltene Polyamide umgefällt werden, indem die Polyamide zumindest teilweise gelöst werden und anschließend ein durchgängiges Abkühlen der Lösung bis unterhalb der Fälltemperatur vorgenommen wird.

11. Verfahren zur schichtweisen Herstellung von dreidimensionalen Objekten, **dadurch gekennzeichnet, dass** mindestens ein Polymerpulver nach einem der Ansprüche 1 bis 9 eingesetzt wird.

12. Verfahren gemäß Anspruch 11, **dadurch gekennzeichnet, dass** es sich bei den Verfahren zur schichtweisen Herstellung von dreidimensionalen Objekten um selektive Laser-Sinter-Verfahren oder um selektives Inhibieren des Verbindens handelt.

13. Verwendung der Polymerpulver gemäß einem der Ansprüche 1 bis 9 zur schichtweisen Herstellung dreidimensionaler Objekte.

14. Verwendung nach Anspruch 13, **dadurch gekennzeichnet, dass** das Verfahren gemäß einem der Ansprüche 11 oder 12 angewendet wird.

15. Dreidimensionale Objekte oder Formkörper, hergestellt durch ein Verfahren nach einem der Ansprüche 11 oder 12.
